# EUROPEAN PATENT APPLICATION

(11) **EP 2 388 202 A1**
(43) Date of publication of application: **23.11.2011**
(21) Application number: 09834457.5
(22) Date of filing: 24.12.2009
(51) Int. Cl.: B65D 8/18, B29C 45/14, B65D 8/04, B65D 8/08, B65D 81/24

(54) **PLASTIC CONTAINER AND METHOD OF MANUFACTURING SAME**

(30) Priority: 26.12.2008 JP 2008332003
(71) Applicant: Hosokawa Yoko Co., Ltd., Tokyo 102-0084 (JP)
(72) Inventor: ICHIKAWA, Toru, Tokyo 102-0084 (JP); ITO, Masahiro, Tokyo 102-0084 (JP); UMENAKA, Kazuhiro, Tokyo 102-0084 (JP); ABE, Koki, Tokyo 102-0084 (JP)
(74) Representative: Hallybone, Huw George
(86) International application number: PCT/JP2009/007163
(87) International publication number: WO 2010/073650

(57) **Abstract**

A bottom 6 is disposed on a lower end portion of a body 2 made of a film having barrier properties against gases. The bottom 6 is composed of a shield 7 and a reinforcement 8. The shield 7 is formed from a film having barrier properties against gases. A lower end opening of the body 2 is closed by welding an outer circumferential surface of a short cylindrical part 7A of the shield 7 to an inner circumferential surface of the body 2. An outer circumferential surface of the reinforcement 8 is welded to an inner circumferential surface of the short cylindrical part 7A. The lower end portion of the body 2 is maintained in a predetermined shape by the reinforcement 8.

## Description

### TECHNICAL FIELD

The present invention relates to a plastic container whose body is made of a film having barrier properties and a method of manufacturing the same.

### BACKGROUND ART

As mentioned in Patent Documents 1 listed below, a container of this kind generally includes a cylindrical body and a bottom that closes a lower end opening of the body. The body is made of a laminated film including at least two layers of resin and a layer of metal composed of an aluminum foil. The layer of metal is interposed between the two resin layers. The bottom is made of a resin plate.

### PRIOR ART DOCUMENTS

### PATENT DOCUMENTS

Patent Document 1: Japanese Patent Application Publication No.2000-103428

### SUMMARY OF INVENTION

### TECHNICAL PROBLEM

In a plastic container including a bottom made of a resin plate, resins having barrier properties against gases such as oxygen and water vapor are chosen as a material for the resin plate to protect articles contained in the container. However, when higher gas barrier properties are required, simply selecting resins is not enough.

### SOLUTION TO PROBLEM

A first aspect of the present invention provides a plastic container comprising: a body made of a film having barrier properties; and a bottom closing one end opening of the body, **characterized in that** the bottom includes a shield made of a film having barrier properties and a reinforcement formed in an annular configuration from resin; an outer circumferential portion of the shield is directly fixed to an inner circumferential surface of the body, thereby closing the one end opening of the body; and an outer circumferential portion of the reinforcement is fixed to the inner circumferential surface of the body, thereby maintaining an one end portion of the body in a predetermined shape.
In this case, it is preferable that the shield comprises a short cylindrical part and a closing part integrally formed in an one end portion of the short cylindrical part and closing an one end opening of the short cylindrical part; an outer circumferential surface of the short cylindrical part is directly fixed to an one end inner circumferential surface of the body, thereby closing the one end opening of the body; and an outer circumferential surface of the reinforcement is fixed to an inner circumferential surface of the short cylindrical part, thereby the outer circumferential surface of the reinforcement being fixed to the inner circumferential surface of the body via the short cylindrical part.
It is particularly preferable that the shield is disposed such that the closing part is positioned nearer to the other end of the body than the short cylindrical part.
It is preferable that a tapered portion is formed in an outer circumferential portion of the closing part, a diameter of the tapered portion gradually reduced from one end side of the short cylindrical part toward the other end side of the short cylindrical part; a space is formed by an outer circumferential surface of the tapered portion and the inner circumferential surface of the short cylindrical part, the space extending annularly, the space having a generally triangular cross sectional configuration; an annular rib is integrally formed in an outer circumferential portion of an end surface of the reinforcement opposed to the closing part, a thickness of the rib being gradually reduced toward a distal end of the rib; and the rib is inserted in the space.
It is preferable that a ring is fixed to an outer circumferential surface of the other end portion of the body, the ring having a strength sufficient to maintain a shape of the body in a predetermined shape; a lid is threadably engaged to an outer circumferential surface of the ring; a shielding sheet is disposed in an opposing portion of the lid opposed to the other end opening of the body, the shielding sheet press-contacted with the other end surface of the body over the entire circumference, thereby closing the other end opening of the body, when the lid is tightened; and the shielding sheet is made of a film having barrier properties.
It is preferable that the film having barrier properties is a laminated film having at least two resin layers and a metal layer interposed between the two resin layers.
A second aspect of the present invention provides a method of manufacturing a plastic container comprising: a body and a bottom, the bottom including a shield and a reinforcement, the shield having a short cylindrical part and a closing part, **characterized in that** the method comprises: using a mold, the mold comprising: a fitting hole to which the body is to be fitted; a shaft to be inserted into the body from the other end opening of the body to a predetermined position; a protrusion to be inserted into an one end portion of the body with an annular gap between an inner circumferential surface of the body and the protrusion, a distal end surface of the protrusion to be pressed against a distal end surface of the shaft via a material film for forming the shield, dimensions of the material film being larger than dimensions of a cross-section of the body by predetermined dimensions; and a closing surface for closing an one end opening of the body; forming the short cylindrical part from an outer circumferential portion of the material film and forming the closing part from an inner circumferential portion of the material film by pouring high temperature molten resin into the gap; forming the reinforcement from the resin poured into the gap; and welding an outer circumferential surface of the short cylindrical part to an inner circumferential surface of the body and welding an outer circumferential surface of the reinforcement to an inner circumferential surface of the short cylindrical part by heat of the resin poured into the gap.
A third aspect of the present invention provides a method of manufacturing a plastic container comprising: a body and a bottom, the bottom including a shield and a reinforcement, the shield having a short cylindrical part and a closing part, **characterized in that** the method comprises: using a mold, the mold comprising: a fitting hole to which the body is to be fitted; a shaft to be inserted into the body from the other end opening of the body except for an one end portion of the shaft; a protrusion to be inserted into an one end portion of the body with an annular gap between an inner circumferential surface of the short cylindrical part of the shield and the protrusion, a distal end surface of the protrusion to be pressed against a distal end surface of the shaft via the closing part of the shield; and a closing surface for closing an one end opening of the body; forming the reinforcement by pouring high temperature molten resin into the gap; and welding an outer circumferential surface of the short cylindrical part to an inner circumferential surface of the body and welding an outer circumferential surface of the reinforcement to an inner circumferential surface of the short cylindrical part by heat of the resin constituting the reinforcement.
A fourth aspect of the present invention provides a method of manufacturing a plastic container comprising: a body and a bottom, the bottom including a shield and a reinforcement, the shield having a short cylindrical part and a closing part, a tapered portion formed in an outer circumferential portion of the closing part, a rib formed in the reinforcement, the rib to be inserted in a space defined by the tapered portion and the body, **characterized in that** the method comprises: using a mold, the mold comprising: a fitting hole to which the body is to be fitted; a shaft to be inserted into the body from the other end opening of the body except for an one end portion of the shaft; a protrusion to be inserted into an one end portion of the body with an annular gap between an inner circumferential surface of the short cylindrical part and the protrusion, the short cylindrical part having a generally same configuration as the shield and being made of a material, a distal end surface of the protrusion to be pressed against a distal end surface of the shaft via the closing part made of the material; a closing surface for closing an one end opening of the body; and a reduced-diameter portion formed in a distal end portion of an outer circumferential surface of the shaft, a diameter of the reduced-diameter portion being gradually reduced towards the distal end surface of the shaft; forming the reinforcement by pouring high temperature molten resin into the gap; forming the tapered portion by pressing an intersection of the short cylindrical part and the closing part of the material into a gap between the reduced-diameter portion of the shaft and an inner circumferential surface of the fitting hole by pouring high temperature molten resin into the gap; integrally forming the rib in the reinforcement by pouring high temperature molten resin into the gap; and welding an outer circumferential surface of the short cylindrical part to an inner circumferential surface of the body and welding an outer circumferential surface of the reinforcement to an inner circumferential surface of the short cylindrical part by heat of the resin constituting the reinforcement.

### ADVANTAGEOUS EFFECTS OF INVENTION

According to the present invention having the above-mentioned features, the one end portion of the body can be maintained in a predetermined shape by the reinforcement. Moreover, since the shield made of the film having barrier properties is directly fixed to the inner circumferential surface of the body and the one end opening of the body is closed only by the shield, gases such as oxygen and water vapor can be prevented from entering inside the body through the bottom.

### BRIEF DESCRIPTION OF DRAWINGS

FIG. 1 is a vertical cross-sectional view of a first embodiment of a plastic container according to the present invention.
FIG. 2 is an enlarged cross-sectional view of a main portion of the first embodiment.
FIG. 3 is a partially omitted vertical cross-sectional view of a mold to explain a first embodiment of a method for manufacturing the plastic container of FIGS. 1 and 2 using the mold.
FIG. 4 is an enlarged cross-sectional view of a main portion of the mold in a clamped condition.
FIG. 5 is an enlarged cross-sectional view of the main portion of the mold with a cavity filled with resin.
FIG. 6 is a cross-sectional view of a main portion of a mold to explain a second embodiment of the method for manufacturing the plastic container of FIGS. 1 and 2 using the mold.
FIG. 7 is a vertical cross-sectional view of a second embodiment of the plastic container according to the present invention.
FIG. 8 is an enlarged cross-sectional view of a main portion of the second embodiment.
FIG. 9 is an enlarged cross-sectional view of a main portion a mold to explain a first embodiment of a method for manufacturing the plastic container of FIGS. 7 and 8 using the mold.
FIG. 10 is an enlarged cross-sectional view of the main portion of the mold with a cavity filled with resin.
FIG. 11 is an enlarged cross-sectional view of a main portion of a mold, the view showing another example of a method for cutting a material film that can be adopted in the method of manufacturing shown in FIG. 3.
FIG. 12 is an enlarged cross-sectional view of a main portion a mold, the view showing still another example of the method for cutting the material film that can be adopted in the method of manufacturing shown in FIG. 3.

### DESCRIPTION OF EMBODIMENTS

A best mode for carrying out the present invention will be described hereinafter with reference to the drawings.

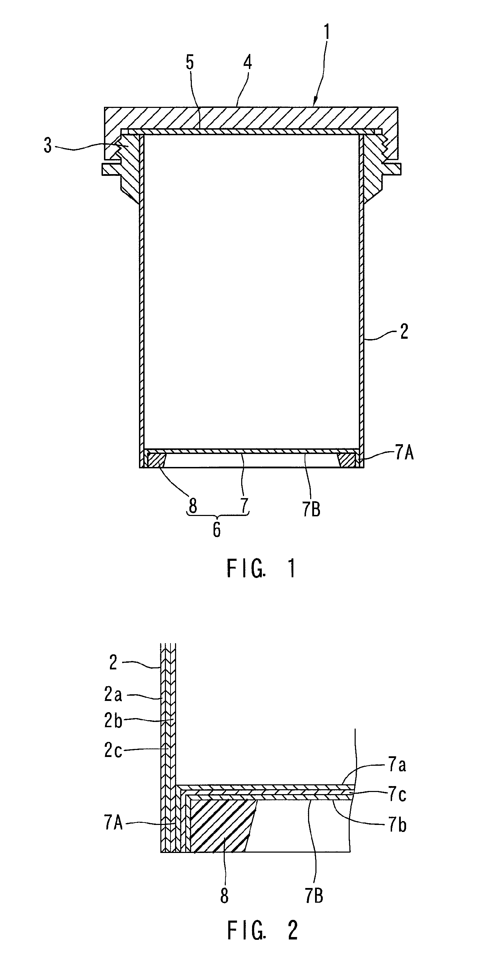

FIG. 1 shows a first embodiment of a plastic container according to the present invention. The plastic container 1 of the first embodiment includes a body 2. The body 2 is formed into a shape of a cylinder having a circular cross-section from a flexible film. The cross-sectional configuration of the body 2 is not limited to be circular, but may be square, for example. As the film constituting the body 2, a film having barrier properties (impermeability) against gases such as water vapor or oxygen and liquids is adopted. Preferably, a film having such properties is a laminated film having at least two resin layers and a metal layer composed of a metal foil interposed between the two resin layers. In this embodiment, as shown in FIG. 2, a three-layered laminated film is adopted. The three-layered laminated film includes two resin layers 2a, 2b composed of polyethylene films and a metal layer 2c composed of an aluminum foil. The metal layer 2c is interposed between the resin layers 2a, 2b. It is to be understood that other films may be used as long as the film has barrier properties.

The body 2 can be formed by overlapping opposite end portions of a rectangular film and bonding the overlapped portions to form an overlap seal or by fixing the overlapped end portions with an adhesive tape, for example. The body 2 can also be formed by abutting the opposite end portions of the rectangular film against each other and bonding them to form a fin seal. To form the overlap seal or the fin seal, the opposite end portions may be welded since the resin layers 2a, 2b are made of the same resin.

A ring 3 extending annularly along an entire circumference of the body 2 is welded (fixed) to an upper end portion (the other end portion) of an outer circumferential surface of the body 2. The ring 3 is composed of a resin that can be fusion-bonded to the resin layer 2a constituting the outermost side of the body 2. Particularly in this embodiment, the ring 3 is made of polyethylene, the same resin as the resin layer 2a, to enable the ring 3 to be fixed to the body 2 at the same time the ring 3 is formed by insert molding. In case the ring 3 is to be adhered to the body 2, the ring 3 may be made of a resin that cannot be fusion-bonded to the resin layer 2a. The ring 3 has a strength sufficient to maintain the upper end portion of the body 2 in a predetermined shape, i.e., a circular shape. The ring 3 is disposed such that an upper end surface of the ring 3 is aligned on the same plane as an upper end surface of the body 2.

A lid 4 is removably, threadably mounted on an outer circumferential portion of the ring 3. A shield sheet 5 is fixed to an under surface of the lid 4. The shield sheet 5 is made of a film having barrier properties against gases and liquids. In this embodiment, the same laminated film as the laminated film constituting the body 2 is used. The shield sheet 5 is press-contacted with the upper end surface of the body 2 and the upper end surface of the ring 3 when the lid 4 is threadably engaged with the ring 3 and fastened. Therefore, when the lid 4 is fastened, an upper end opening of the body 2 is closed air-tightly by the shield sheet 5. Therefore, gases and liquis can be prevented from entering inside the body 2 through the upper end opening of the body 2. The lid 4, threadably engaged with the ring 3, may alternatively be hinged to the ring 3 in a rotatable manner.

A bottom 6 is fixed to a lower end portion (one end portion) of an inner circumferential surface of the body 2. The bottom 6 includes a shield 7 and a reinforcement 8.

The shield 7 is composed of a film having barrier properties against gases and liquids. As a film constituting the shield 7, as with the laminated film constituting the body 2, a laminated film including at least two resin layers 7a, 7b and a metal layer 7c composed of a metal foil such as an aluminum foil. It is to be understood that other films may be used as long as the film has barrier properties against gases and liquids. In this embodiment, an outer circumferential surface of a short cylindrical part 7A of the shield 7 is welded to the inner circumferential surface of the body 2 as will be described later. To realize this feature, a resin that can be welded to the resin layer 2b, particularly polyethylene that is the same resin as the one forming the resin layer 2b, is adopted as a material for the resin layer 7a.

The shield 7 includes the short cylindrical part 7A and a closing part 7B. An outer diameter of the short cylindrical part 7A is the same as an inner diameter of the body 2. On the other hand, the closing part 7B is integrally formed in an upper end portion (one end portion) of the short cylindrical part 7A and closes an upper end opening of the short cylindrical part 7A.

The short cylindrical part 7A is disposed with the closing part 7B placed on an upper side (the other end side of the body 2). The outer circumferential surface of the short cylindrical part 7A is welded (fixed) to the lower end portion of the inner circumferential surface of the body 2. As a result, a lower end opening of the body 2 is closed by the shield 7. The short cylindrical part 7A may be fixed by other means such as adhesion. In such case, the resin layer 7a may be composed of a resin that cannot be fusion-bonded to the resin layer 2b. A lower end surface of the short cylindrical part 7A is aligned on the same plane as a lower end surface of the body 2. However, it is not a requirement, and the lower end surface of the short cylindrical part 7A may be positioned slightly above the lower end surface of the body 2.

The reinforcement 8 has a strength sufficient to maintain the lower end portion of the body 2 in a predetermined shape. The reinforcement 8 extends along an inner circumferential surface of the short cylindrical part 7A and is formed in a circular ring configuration. An outer circumferential surface of the reinforcement 8 is welded (fixed) to the inner circumferential surface of the short cylindrical part 7A over the entire circumference of the short cylindrical part 7A. As a result, the outer circumferential surface of the reinforcement 8 is welded to the inner circumferential surface of the body 2 via the short cylindrical part 7A. An upper end surface of the reinforcement 8 is welded to an outer circumferential portion of an under surface of the closing part 7B over the entire circumference of the closing part 7B. In order to weld the reinforcement 8 to the inner circumferential surface of the short cylindrical part 7A and the under surface of the closing part 7B, the reinforcement 8 is made of a resin that can be welded to the resin layer 7b. Particularly in this embodiment, the reinforcement 8 is made of polyethylene that is the same resin as the one forming the resin layer 7b. A lower end surface of the reinforcement 8 is aligned on the same horizontal plane as the lower end surface of the body 2.

In the plastic container 1 having the above-described construction, the upper end portion of the body 2 is maintained in the predetermined shape by the ring 3 and the lower end portion of the body 2 is maintained in the predetermined shape by the reinforcement 8. Therefore, the shape of the body 2 will be hardly changed when fluid substances such as adhesive agents and paints are contained in the body 2. Moreover, when the substances contained in the container 1 is consumed and the container 1 is to be disposed, the volume of the container 1 as a waste can be reduced by vertically pressing the body 2.

Furthermore, since the lower end opening of the body 2 is closed by the shield 7 composed of the laminated film having barrier properties, the gasses and the liquids can be prevented from entering into the body 2 through the bottom 6. Particularly in this embodiment, since the upper end opening of the body 2 is closed by the shield sheet 5, the gasses can be prevented from entering inside the body 2 through the upper end opening. The lid 4 may be made of metal. In this case, the shield sheet 5 is not required.

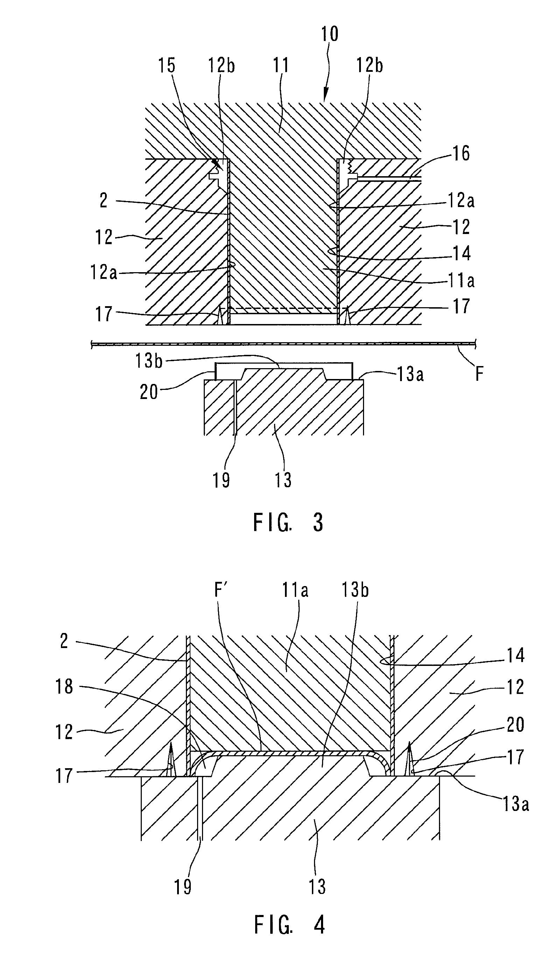

The plastic container 1, except for the lid 4 and the shield sheet 5, can be made using a mold 10 shown in FIG. 3. The mold 10 includes a fixed mold 11 and a pair of split molds 12, 12 arranged in the right and left and a movable mold 13 disposed below the fixed mold 11 such that the movable mold 13 can be moved in the vertical direction.

An under surface of the fixed mold 11 is a horizontal flat surface. A shaft 11a having an axis thereof oriented in the vertical direction is formed in the under surface. An outer diameter of the shaft 11a is the same as the inner diameter of the body 2. The shaft 11a is inserted in the body 2 through the upper end opening of the body 2. A length of the shaft 11a is shorter than a length of the body 2 by a predetermined length. Accordingly, when the shaft 11a is inserted into the body 2 until the upper end surface of the body 2 is abutted against the under surface of the fixed mold 11, a distal end surface (lower end surface) of the shaft 11a is positioned above the lower end surface of the body 2 and spaced from the lower end surface of the body 2 by a predetermined distance.

The pair of split molds 12, 12 are disposed in contact with the under surface of the fixed mold 11 such that the split molds 12, 12 can be moved in a left-right direction to be closer and away from each other. Concave portions 12a, 12a are respectively formed in opposing surfaces of the split molds 12, 12. Each of the concave portions 12a, 12a vertically extends from an upper end surface to a lower end surface of each of the split mold 12. Each of the concave portions 12a, 12a has a half-circular cross-sectional configuration. Therefore, when the split molds 12, 12 are clamped to be abutted against each other, a fitting hole 14 having a circular configuration in cross-section is formed by the concave portions 12a, 12a. An inner diameter of the fitting hole 14 is same as the outer diameter of the body 2. Therefore, when the split mold 12, 12 is clamped, an outer circumference of the body 2 fitted around the shaft 11a is fitted in the fitting hole 14. Moreover, since a length of the fitting hole 14 (length of the split mold 12 in the vertical direction) is designed to be the same as an entire length of the body 2, the body 2 is fitted in the fitting hole 14 over the entire length. Moreover, lower end surfaces of the split mold 12, 12 are positioned on the same horizontal plane with the lower end surface of the body 2.

Large diameter concave portions 12b, 12b are respectively formed in upper end portions of the concave portions 12a, 12a. The large diameter concave portions 12b, 12b extend along the concave portions 12a, 12a in a half circular configuration. Therefore, when the pair of split molds 12, 12 are clamped, an annular cavity 15 is formed by the large diameter concave portions 12b, 12b, the outer circumferential surface of the body 2 and the under surface of the fixed mold 11. The cavity 15 is provided for forming the ring 3. Molten resin for forming the ring 3 is fed to the cavity 15 through a runner 16.

Clearance recesses 17, 17 are respectively formed in lower end surfaces of the pair of split molds 12, 12. When the split molds 12, 12 are clamped, the clearance recesses 17, 17 become annular, surrounding the fitting hole 14. A depth of the clearance recess 17 (a depth in an axial direction of the fitting hole 14) is designed to be deeper than the distance between the lower end surface of the body 2 and the distal end surface of the shaft 11a by a predetermined amount.

The movable mold 13 is disposed below the shaft 11a. A top surface (closing surface) 13a of the movable mold 13 is composed of a flat surface orthogonal to the axis of the shaft 11a, i. e. a horizontal surface. A protrusion 13b protruded upward is formed on the top surface 13a. A height of the protrusion 13b is designed to be lower than the distance between the lower end surface of the body 2 and the distal end surface of the shaft 11a by a thickness of a material film F for the shield 7. Accordingly, as shown in FIG. 4, when the movable mold 13 is clamped until the top surface 13a of the movable mold 13 is abutted against the lower end surface of the split molds 12, 12, a distal end surface (upper end surface) of the protrusion 13b is abutted against the distal end surface of the shaft 11a via the material film F.

The protrusion 13b is formed in a tapered configuration with a diameter of the protrusion 13b gradually reduced upwards. A largest outer diameter of the protrusion 13b, i.e. an outer diameter of a basal end portion of the protrusion 13b is designed to be smaller than the inner diameter of the body 2. The outer diameter of the protrusion 13b may be constant throughout an entire length of the protrusion 13b as long as the outer diameter of the protrusion 13b is smaller than the inner diameter of the body 2. When the protrusion 13b is inserted in the body 2 until the distal end surface of the protrusion 13b is abutted against the distal end surface of the shaft 11a via the material film F, an annular cavity (gap) 18 is formed by the inner circumferential surface of the body 2, the distal end surface of the shaft 11a, the top surface 13a of the movable mold 13 and an outer circumferential surface of the protrusion 13b as shown in FIG. 4. The cavity 18 is for forming the shield 7 from the material film F and for forming the reinforcement 8. Molten resin for forming the reinforcement 8 is fed to the cavity 18 through the runner 19.

A cutting blade 20 is disposed on the top surface 13a of the movable mold 13. The cutting blade 20 is formed in an annular configuration surrounding the protrusion 13b. The cutting blade 20 is positioned such that when the movable mold 13 is clamped, the cutting blade 20 enters the clearance recesses 17, 17. A height of the cutting blade 20 is designed such that when the movable mold 13 is moved upward for clamping, the cutting blade 20 can cut the material film F before the protrusion 13b is abutted against the material film F horizontally placed between the split molds 12, 12 and the movable mold 13. The cutting blade 20 may be disposed such that the cutting blade 20 cuts the material film F at the same time or immediately after the protrusion 13b is abutted against the material film F.

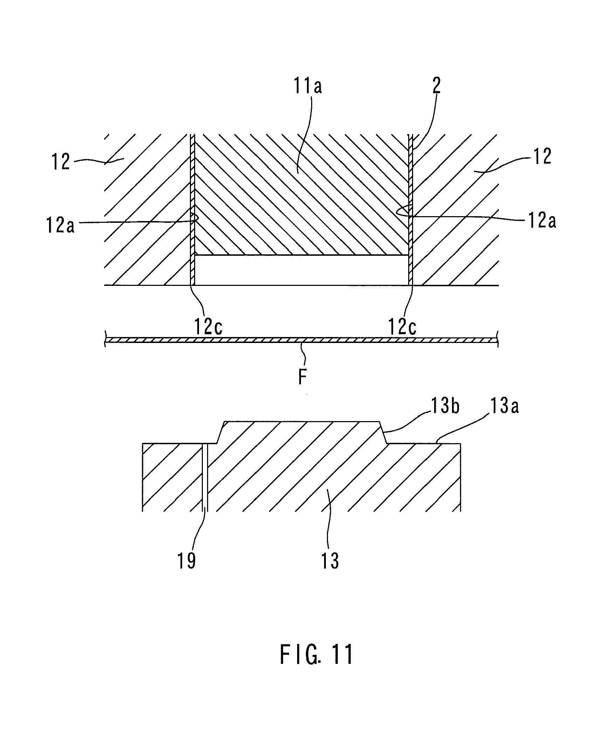

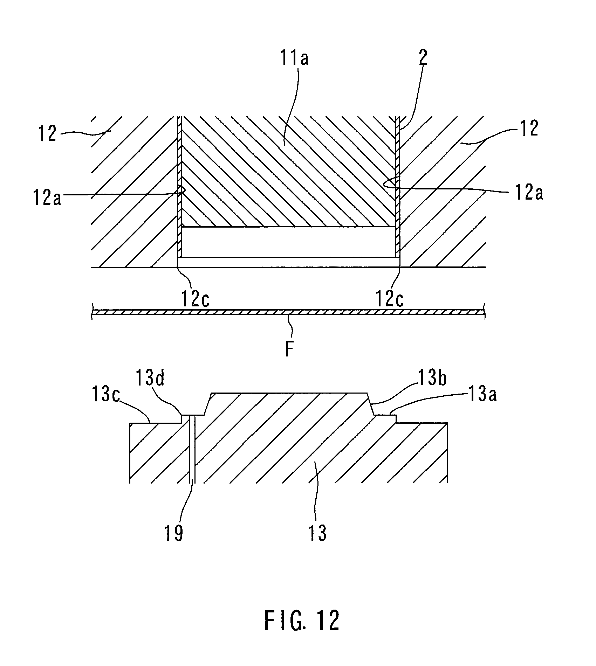

The material film F may alternatively be cut in a method shown in FIG. 11 or another method shown in FIG. 12. In the cutting method shown in FIG. 11, the material film F is press-cut at an intersection 12c between the lower end surface of the split mold 12 and an inner circumferential surface of the concave portion 12a. At the time of press-cutting, a lower end portion of the body 2 is pressed upward by a height corresponding to the thickness of the material film F. But it will not be a problem since the material film F is thin. In the cutting method shown in FIG. 12, a lower end portion of the split mold 12 is protruded downward from the lower end surface of the body 2 further than the thickness of the material film F. An annular recess 13c in which the lower end portions of the split molds 12 are fitted is formed in the top surface 13a of the movable mold 13. The material film F can be sheared (cut) by the intersection 12c between the lower end surface of the split mold 12 and the inner circumferential surface of the concave portion 12a and an intersection 13d between the top surface 13a of the movable mold 13 and an inner circumferential surface of the annular recess 13c.

To manufacture the container 1 except for the lid 4 and the shield sheet 5 using the mold 10 having above-mentioned construction, the body 2 is preliminarily formed by the laminated film. The fixed mold 11, the pair of split molds 12, 12 and the movable mold 13 are opened and the material film F is horizontally placed in an intermediate portion between the split molds 12, 12 and the movable mold 13 in the vertical direction. Then, as shown in FIG. 4, the shaft 11a is fitted into the body 2. Next, the pair of split molds 12, 12 are moved closer to each other to be clamped and the outer circumference of the body 2 is fitted in an inner circumference of the fitting hole 14. After that the movable mold 13 is moved upward to be clamped. When the movable mold 13 is moved upward, the cutting blade 20 cuts the material film F. As a result, a circular secondary material F' having a diameter required for forming the shield 7 is cut off from the material film F. The cut-off secondary material F' is placed on a top surface of the protrusion 13b and moved upward together with the movable mold 13. When the movable mold 13 is clamped, as shown in FIG. 4, a central portion of the secondary material F' is held between the distal end surface of the shaft 11a and the distal end surface of the protrusion 13b and an outer circumferential portion of the secondary material F' is received in the cavity 18.

After that the molten resin having high-temperature is poured in the cavity 15 to fill the cavity 15. The molten resin filled in the cavity 15 is hardened, and thereby the ring 3 is formed. Moreover, at least a surface layer portion of the resin layer 2a constituting the outer circumferential surface of the body 2 is softened or melted, and as a result, an inner circumferential portion of the ring 3 is welded and fixed to an outer circumferential portion of the body 2 at the same time the ring 3 is formed.

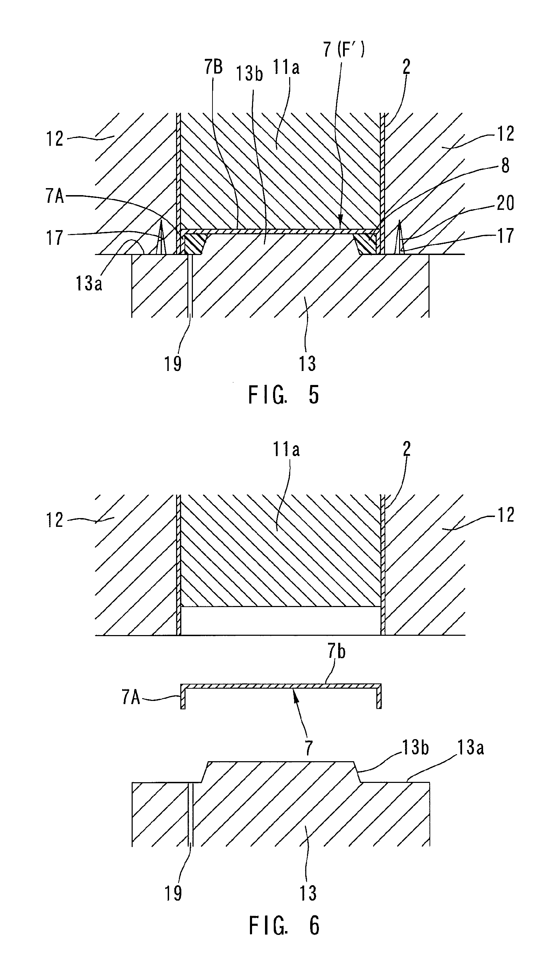

At the same time or slightly before or after the filling of the molten resin into the cavity 15, the molten resin having high-temperature is poured in the cavity 18 to fill the cavity 18. An opening of a runner 19 facing the cavity 18 is positioned further inside than an outer circumferential edge of the secondary material F' in the radial direction. Accordingly, when the molten resin is poured in the cavity 18, an inner portion of the outer circumferential portion of the secondary material F' protruded from the outer circumferential surface of the protrusion 13b is pressed against the distal end surface of the shaft 11a by the resin that is poured in. And an outer portion of the outer circumferential portion of the secondary material F' protruded from the outer circumferential surface of the protrusion 13b is pressed against the inner circumferential surface of the body 2. At this time, since the secondary material F' is softened by the heat of the molten resin, the outer circumferential portion of the secondary material F', especially an outer portion of the outer circumferential portion of the secondary material F' is pressed against the inner circumferential surface of the body 2 without gap. As a result, the short cylindrical part 7A and the closing part 7B are formed from the secondary material F'. After that, as shown in FIG. 5, when the molten resin is filled in the cavity 18 without gap, the reinforcement 8 is formed between the short cylindrical part 7A and the protrusion 13b. Moreover, the heat of the molten resin causes the resin layer 7a constituting the outer circumferential surface of the short cylindrical part 7A and the resin layer 2b constituting the inner circumferential surface of the body 2 to be welded. At the same time, the heat also causes the resin layer 7b constituting the inner circumferential surface of the short cylindrical part 7A and the under surface of the closing part 7B and the outer circumferential surface and a distal end surface of the reinforcement 8 to be welded.

After the resin filled in the cavities 15, 18 are hardened and the forming of the ring 3 and the reinforcement 8 are finished, the movable mold 13 is moved downward and then the split molds 12, 12 are moved away from each other. After opening the molds in this way, the body 2 is removed from the shaft 11a. In this way, the container 1 except for the lid 4 and the shield sheet 5 can be manufactured. The lid 4 can be formed in various forming methods. The shield sheet 5 can be fixed to the lid 4 by adhesion or other methods. Then, the container 1 is manufactured by threadably engaging the lid 4 with the ring 3, the lid 4 having the shield sheet 5 disposed thereon.

The bottom 6 of the container 1 can be manufactured by other methods. For example, while in the embodiment mentioned above, the secondary material F' is cut out from the material film F by the cutting blade 20 disposed in the movable mold 13, a material having the same dimensions with the secondary material F' may be formed beforehand. In this case, the cutting blade 20 and the clearance recess 17 are not required. The dimensions of the secondary material F' or the material alternative to the secondary material F' should be sized to be greater than the inner diameter of the body 2 so that the short cylindrical part 7A can be made. Moreover, the dimensions of the secondary material F' or the alternative material may be determined as appropriate according to dimensions of the short cylindrical part 7A and the closing part 7B of the shield 7 and based on experiments.

FIG. 6 shows still another method of manufacturing the bottom 6 of the container 1. In this manufacturing method, the shield 7 having the short cylindrical part 7A and the closing part 7B is formed beforehand and the short cylindrical part 7A of the shield 7 is fitted to the lower end portion of the body 2 before the movable mold 13 is clamped. After that, when the movable mold 13 is moved upward and clamped, a central portion of the closing part 7B is held between the distal end surface of the shaft 11a and the distal end surface of the protrusion 13b and the cavity 18 is formed between the inner circumferential surface of the short cylindrical part 7A and the protrusion 13b. The reinforcement 8 is formed by pouring the molten resin in the cavity 18 and filling the cavity 18 with the molten resin. Moreover, the outer circumferential surface of the short cylindrical part 7A is welded to the inner circumferential surface of the body 2 and the outer circumferential surface and a top surface of the reinforcement 8 are respectively welded to the outer circumferential surface of the short cylindrical part 7A and an under surface of the shield 7.

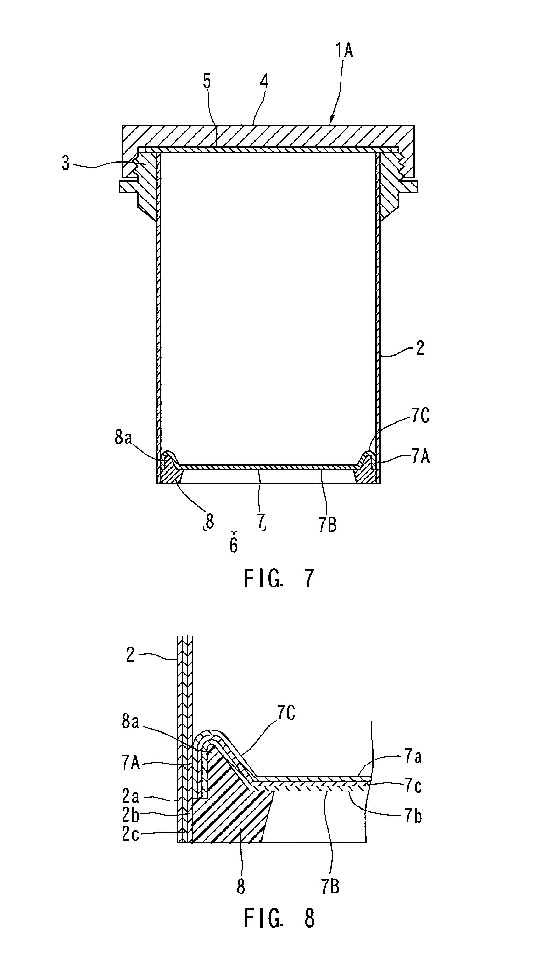

FIGS. 7 and 8 show a second embodiment of the plastic container according to the present invention. In a plastic container 1A in this embodiment, a tapered portion 7C is formed in an outer circumferential portion of the closing part 7B. A diameter of the tapered portion 7C is gradually reduced from an upper end side (the other end side) of the short cylindrical part 7A toward a lower end side (one end side) of the short cylindrical part 7A. As a result, the central portion of the closing part 7B is positioned lower with respect to the outer circumferential portion of the closing part 7B by a height of the tapered portion 7C in the vertical direction. A space having a triangle cross-sectional configuration is annularly formed between the tapered portion 7C and the short cylindrical part 7A. Resin is filled in the entirety of the space to integrally form an annularly extending rib 8a on the top surface of the reinforcement 8. A thickness (dimension in the radial direction of the body 2) of the rib 8a is gradually reduced upwards corresponding to the triangle shape of the space. In the container 1A, the short cylindrical part 7A is spaced upwards from the lower end surface of the body 2 by a predetermined distance. As a result, a lower portion of the outer circumferential surface of the reinforcement 8 is directly welded to the inner circumferential surface of the body 2. But an upper portion of the outer circumferential surface of the reinforcement 8 is welded to the inner circumferential surface of the short cylindrical part 7A.

According to the container 1A, when a force inward in the radial direction is applied to a portion of the body 2 adjoining the bottom 6 in an upper side, the body 2 can be prevented from being broken. To be more specific, in the container 1 shown in FIGS. 1 and 2, a strength of a portion of the body 2 to which the bottom 6 is welded and a strength of a portion of the body 2 higher than the bottom 6 are extremely different. Therefore, when an external force inward in the radial direction is applied to a portion of the outer circumferential surface of the body 2 located slightly higher than the bottom 6, stress is concentrated on a boundary area between the portion welded to the bottom 6 and the portion higher than the bottom 6. This may cause the body 2 to be broken from the boundary area. On the other hand, in the container 1A, when the similar external force is applied to the similar portion, a distal end portion of the rib 8a is flexibly deformed inward in the radial direction. This is because the thickness of the rib 8a is reduced toward a distal end of the rib 8a. Accordingly, external force does not concentrate on the boundary area and instead, disperses to a wide area of the body 2. Therefore, the body 2 can be prevented from being broken from the boundary area. On the other hand, in the container 1A, the central portion of the closing part 7B is positioned lower with respect to the outer circumferential portion of the closing part 7B by the height of the tapered portion 7C in the vertical direction. Therefore, an internal volume of the container 1A can be made greater than that of the container 1 of the first embodiment by the height corresponding to the amount by which the central portion of the closing part 7B is positioned lower. In the first embodiment, the closing part 7B and the upper end portion of the short cylindrical portion 7A of the container 1 are aligned at the same position in a vertical direction.

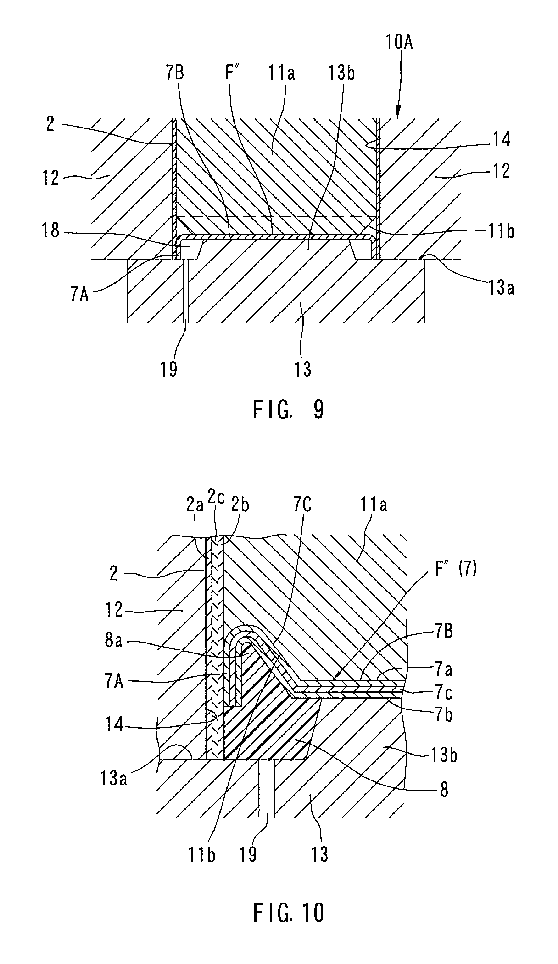

FIGS. 9 and 10 show a mold 10A to be used for manufacturing the plastic container 1A except for the lid 4 and the shield sheet 5. In the mold 10A, a reduced diameter portion 11b having a diameter gradually reduced downwards is formed in a distal end portion of an outer circumferential surface of the shaft 11a. A shape and dimensions of the reduced diameter portion 11b correspond to those of the tapered portion 7C except for an end portion in a larger diameter side. The entirety of the reduced diameter portion 11b including the end portion in the larger diameter side may be formed to have a shape and dimensions corresponding to those of the tapered portion 7c. Other features of the mold 10A are the same as those of the mold 10.

To manufacture the container 1A using the mold 10A having the above-mentioned constitution, a material F" is used as the material film. The material F" has generally the same configuration as the shield 7 except that the intersection between the short cylindrical part 7A and the closing part 7B is formed in a circular arcuate configuration.

When the molten resin is poured into the cavity 18 with the material F" mounted inside the cavity 18, the pressure of the molten resin causes the intersection of the short cylindrical part 7A and the closing part 7B of the material F" to be pressed into a space defined by an outer circumferential surface of the reduced diameter portion 11b and the inner circumferential surface of the body 2 and to be pressed against the outer circumferential surface of the reduced diameter portion 11b and the inner circumferential surface of the body 2. In this way, the tapered portion 7C is formed and the short cylindrical portion 7A continuing from the tapered portion 7C are formed. As a result, an annular space having a triangular cross-sectional configuration is formed by the tapered portion 7C and the inner circumferential surface of the body 2. The space becomes a part of the cavity 18. Accordingly the molten resin is also poured into the space and fills the space. Therefore, when the molten resin is poured into the cavity 18 and the cavity 18 is filled with the molten resin, the reinforcement 8 is formed and at the same time, the rib 8a is integrally formed with the reinforcement 8.

The present invention is not limited to the embodiments described above. Various modifications can be made without departing from the spirit and scope of the invention.
For example, while in the embodiments mentioned above, the top end opening of the body 2 is closed by the lid 4 threadably engaged to the ring 3, the top end opening of the body 2 may be closed by pressing the top end portion of the body 2 in a direction orthogonal to a diameter line to make inner circumferential surfaces of the upper end portion of the body 2 abutted against each other and by welding the abutted surfaces to each other.
Moreover, while in the embodiments mentioned above, an injection-molding is performed with the axis of the body 2 oriented in the vertical direction, the injection-molding may be performed with the axis of the body 2 oriented in the left-right direction.
Furthermore, forming the ring 3 and forming the bottom 6 may be preformed in separate steps.

### INDUSTRIAL APPLICABILITY

The plastic container according to the present invention may be used as a container for articles or substances which should be kept away from air and vapor.

### REFERENCE SIGNS LIST

- F: material film
- F': secondary material
- F": material
- 1: plastic container
- 1A: plastic container
- 2: body
- 2a: resin layer
- 2b: resin layer
- 2c: metal layer
- 3: ring
- 4: lid
- 5: shield sheet
- 6: bottom
- 7: shield
- 7A: short cylindrical part
- 7B: closing part
- 7C: tapered portion
- 7a: resin layer
- 7b: resin layer
- 7c: metal layer
- 8: reinforcement
- 8a: rib
- 10: mold
- 10A: mold
- 11a: shaft
- 11b: reduced diameter portion
- 13a: top surface (closing surface)
- 13b: protrusion
- 14: fitting hole
- 18: cavity (gap)

## Claims

1. A plastic container comprising:
a body (2) made of a film having barrier properties; and
a bottom (6) closing one end opening of the body (2),
**characterized in that** the bottom (6) includes a shield (7) made of a film having barrier properties and a reinforcement (8) formed in an annular configuration from resin;
an outer circumferential portion of the shield (7) is directly fixed to an inner circumferential surface of the body (2), thereby closing the one end opening of the body (2); and
an outer circumferential portion of the reinforcement (8) is fixed to the inner circumferential surface of the body (2), thereby maintaining an one end portion of the body (2) in a predetermined shape.

2. The plastic container according to claim 1 wherein the shield (7) comprises a short cylindrical part (7A) and a closing part (7B) integrally formed in an one end portion of the short cylindrical part (7A) and closing an one end opening of the short cylindrical part (7A);
an outer circumferential surface of the short cylindrical part (7A) is directly fixed to an one end inner circumferential surface of the body (2), thereby closing the one end opening of the body (2); and
an outer circumferential surface of the reinforcement (8) is fixed to an inner circumferential surface of the short cylindrical part (7A), thereby the outer circumferential surface of the reinforcement (8) being fixed to the inner circumferential surface of the body (2) via the short cylindrical part (7A).

3. The plastic container according to claim 2 wherein the shield (7) is disposed such that the closing part (7B) is positioned nearer to the other end of the body (2) than the short cylindrical part (7A).

4. The plastic container according to claim 3 wherein a tapered portion (7C) is formed in an outer circumferential portion of the closing part (7B), a diameter of the tapered portion (7C) gradually reduced from one end side of the short cylindrical part (7A) toward the other end side of the short cylindrical part (7A);
a space is formed by an outer circumferential surface of the tapered portion (7C) and the inner circumferential surface of the short cylindrical part (7A), the space extending annularly, the space having a generally triangular cross sectional configuration;
an annular rib (8a) is integrally formed in an outer circumferential portion of an end surface of the reinforcement (8) opposed to the closing part (7B), a thickness of the rib (8a) being gradually reduced toward a distal end of the rib (8a); and
the rib (8a) is inserted in the space.

5. The plastic container according to any one of claims 1 to 4 wherein a ring (3) is fixed to an outer circumferential surface of the other end portion of the body (2), the ring (3) having a strength sufficient to maintain a shape of the body in a predetermined shape;
a lid (4) is threadably engaged to an outer circumferential surface of the ring (3);
a shielding sheet (5) is disposed in an opposing portion of the lid (4) opposed to the other end opening of the body (2), the shielding sheet (5) press-contacted with the other end surface of the body (2) over the entire circumference, thereby closing the other end opening of the body (2), when the lid (4) is tightened; and
the shielding sheet (5) is made of a film having barrier properties.

6. The plastic container according to any one of claims 1 to 5 wherein the film having barrier properties is a laminated film having at least two resin layers (2a, 2b) and a metal layer (2c) interposed between the two resin layers (2a, 2b).

7. A method of manufacturing the plastic container (1) according to claim 3 **characterized in that** the method comprises:
using a mold (10), the mold (10) comprising:
a fitting hole (14) to which the body (2) is to be fitted;
a shaft (11a) to be inserted into the body (2) from the other end opening of the body (2) to a predetermined position;
a protrusion (13b) to be inserted into an one end portion of the body (2) with an annular gap between an inner circumferential surface of the body (2) and the protrusion (13b), a distal end surface of the protrusion (13b) to be pressed against a distal end surface of the shaft (11a) via a material film (F) for forming the shield (7), dimensions of the material film (F) being larger than dimensions of a cross-section of the body (2) by predetermined dimensions; and
a closing surface (13a) for closing an one end opening of the body (2);
forming the short cylindrical part (7A) from an outer circumferential portion of the material film (F) and forming the closing part (7B) from an inner circumferential portion of the material film (F) by pouring high temperature molten resin into the gap;
forming the reinforcement (8) from the resin poured into the gap; and
welding an outer circumferential surface of the short cylindrical part (7A) to an inner circumferential surface of the body (2) and welding an outer circumferential surface of the reinforcement (8) to an inner circumferential surface of the short cylindrical part (7A) by heat of the resin poured into the gap.

8. A method of manufacturing the plastic container (1) according to claim 3 **characterized in that** the method comprises:
using a mold (10), the mold (10) comprising:
a fitting hole (14) to which the body (2) is to be fitted;
a shaft (11a) to be inserted into the body (2) from the other end opening of the body (2) except for an one end portion of the shaft (11a);
a protrusion (13b) to be inserted into an one end portion of the body (2) with an annular gap between an inner circumferential surface of the short cylindrical part (7A) of the shield (7) and the protrusion (13b), a distal end surface of the protrusion (13b) to be pressed against a distal end surface of the shaft (11a) via the closing part (7B) of the shield (7); and
a closing surface (13a) for closing an one end opening of the body (2);
forming the reinforcement (8) by pouring high temperature molten resin into the gap; and
welding an outer circumferential surface of the short cylindrical part (7A) to an inner circumferential surface of the body (2) and welding an outer circumferential surface of the reinforcement (8) to an inner circumferential surface of the short cylindrical part (7A) by heat of the resin constituting the reinforcement (8).

9. A method of manufacturing the plastic container (1A) according to claim 4 **characterized in that** the method comprises:
using a mold (10A), the mold (10A) comprising:
a fitting hole (14) to which the body (2) is to be fitted;
a shaft (11a) to be inserted into the body (2) from the other end opening of the body (2) except for an one end portion of the shaft (11a);
a protrusion (13b) to be inserted into an one end portion of the body (2) with an annular gap between an inner circumferential surface of the short cylindrical part (7A) and the protrusion (13b), the short cylindrical part (7A) having a generally same configuration as the shield (7) and being made of a material (F"), a distal end surface of the protrusion (13b) to be pressed against a distal end surface of the shaft (11a) via the closing part (7B) made of the material (F");
a closing surface (13a) for closing an one end opening of the body (2); and
a reduced-diameter portion (11b) formed in a distal end portion of an outer circumferential surface of the shaft (11a), a diameter of the reduced-diameter portion (11b) being gradually reduced towards the distal end surface of the shaft (11a);
forming the reinforcement (8) by pouring high temperature molten resin into the gap;
forming the tapered portion (7C) by pressing an intersection of the short cylindrical part (7A) and the closing part (7B) of the material (F') into a gap between the reduced-diameter portion (11b) of the shaft (11a) and an inner circumferential surface of the fitting hole (14) by pouring high temperature molten resin into the gap;
integrally forming the rib (8a) in the reinforcement (8) by pouring high temperature molten resin into the gap; and
welding an outer circumferential surface of the short cylindrical part (7A) to an inner circumferential surface of the body (2) and welding an outer circumferential surface of the reinforcement (8) to an inner circumferential surface of the short cylindrical part (7A) by heat of the resin constituting the reinforcement (8).
